# EUROPEAN PATENT SPECIFICATION

(11) **EP 3 250 524 B1**
(45) Date of publication and mention of the grant of the patent: **13.08.2025**
(21) Application number: 16701668.2
(22) Date of filing: 27.01.2016
(51) Int. Cl.: C03B 5/235, C03C 13/06, C03B 5/00, C03C 1/00, C03B 5/44, B09B 3/00, B09B 3/29

(54) **GLASS MELTING**
SCHMELZEN VON GLAS
FUSION DU VERRE

(30) Priority: 27.01.2015 GB 201501314
(43) Date of publication of application: 06.12.2017
(73) Proprietor: Knauf Insulation, 4600 Visé (BE)
(72) Inventor: DEMOTT,Gerard, 1435 Mont-Saint-Guibert (BE); MAROLT, Bostjan, 1435 Mont-Saint-Guibert (BE); DUCARME, David, 1435 Mont-Saint-Guibert (BE)
(74) Representative: ARC-IP
(86) International application number: PCT/EP2016/051736
(87) International publication number: WO 2016/120352

(56) References cited:
- WO-A1-2014/193388
- WO-A1-2015/014918
- WO-A1-2015/014920
- WO-A1-2015/014921
- DE-A1- 10 029 983
- US-A1- 2005 039 491
- US-A1- 2009 176 639
- US-A1- 2013 260 980
- US-A1- 2014 007 623

## Description

The present invention relates to an improved process for glass melting.

Glass melting is understood herein to include the melting of glass as well as similar vitrified products, for example for the production of flat glass, container glass or mineral fibers, more particularly mineral wool fibers, such as glass wool or stone wool.

Processes for glass melting are well known in the art. Raw materials suitable for glass production are melted in a melter and the melt is withdrawn for further processing and forming in appropriate equipment. In the case of mineral fiber production, the forming equipment may be so-called internal centrifugal fiberizers or external centrifugal fiberizers. The fibers generated may then be coated with a curable binder and collected in the form of a non-woven mat on a conveyer belt and pass through a curing oven for the production of insulating products.

Glass melting is an energy intensive process and many efforts have been undertaken to reduce energy consumption. One of the routes followed to reduce energy consumption relates to modifications to the melter, aiming at increasing the energy efficiency of the process. Submerged combustion melters are known for their improved energy efficiency. These melters are characterized by the fact that they include one or more burner nozzles arranged below the surface of the melt, in a lance, in the melter walls and/or melter bottom, preferably in the melter bottom, such that the burner flame and/or combustion products pass through the melt and transfer energy directly to the melt. The submerged combustion melter ensures efficient mixing in the melt and homogenizes the melt in terms of temperature profile and composition leading to a high quality melt. The stirring reduces required residence time in the melter prior to withdrawal for downstream forming. It also favors the absorption of raw material into the melt and improves heat transfer to fresh raw material. Fresh raw material may be charged into the melter as relatively large stones and does not require grinding into fine granular size. The high turbulence generated in the melt maintains it at the required viscous state suitable for downstream formation, at a temperature below the temperature normally required in standard tank melters.

Another route to reduce energy consumption is to replace part at least of the raw materials used by glass cullet. The energy required to remelt glass is lower than the energy required to prepare glass from fresh raw materials. The quantity of glass cullet used in the raw material mix may amount up to 60 - 80 % wt. or even more. As used herein, the term "glass cullet" includes pre-consumer cullet and scrap, as well as post-consumer cullet. The use of post-consumer glass cullet, however, is generally limited by the quality, that is essentially the contamination level, thereof. It is generally costly and difficult to separate undesired contaminants from post-consumer cullet. While nowadays selective collection of glass from different applications, such as window flat glass, automotive glass, glass from solar energy equipment, glass from electronic applications (e.g. TV screens), scrap mineral fibers, may allow to maintain constant quality and/or to increase the quality of glass cullet by maintaining certain undesirable contaminants in post-consumer cullet below a certain level, certain highly contaminated glass cullet or glass cullet contaminated with undesirable contaminants has still not found its way into recycling industrial glass manufacturing processes, and may need to be landfilled.

Glass cullet contaminated with organics, such as PVB films found in laminated glass, mostly automotive glass, have already been recycled in glass melters, including submerged combustion melters, but at an organics concentration in the cullet of maximum 0.5 to 0.8 wt% for melters operating under oxidizing conditions. At the high end of the range, difficulties become apparent in the processing of the melter, and beyond the 0.8% limit, the difficulties become unacceptable in a well operating melter followed by downstream processing of high quality products. So far, glass cullet from automotive glass is subjected to a "cleaning" process aiming at extracting part at least of the PVB polymer film.

Submerged combustion melters have also been used to vitrify different types of waste by making use of the energy content of the waste. Such melters however operate under reducing conditions.

Glass cullet from boron glass (mostly high temperature resistant glass) is generally discarded in glass melting because these contaminants require higher melting temperatures. Boron oxide contaminations of cullet up to 2.5 to 3.0 % by weight have nevertheless been tolerated in some situations, for admission into submerged combustion melters.

Glass cullet contaminated with high melting contaminants, such as ceramic contaminants, is mostly also discarded in glass melting because these contaminants require higher melting temperatures and at normal glass melting temperatures pose difficulties notably in downstream equipments.

US2013/260980 discloses methods for forming glass compositions from cullet which include providing the cullet to a submerged combustion melter and melting the cullet with the aid of heat generated upon combustion of hydrocarbon from landfill gas and, in some cases, a polymeric material, in the presence of an oxidant. The melted cullet is then directed to a fiberization unit

US2005/039491 discloses a device for melting batch materials that combines at least two separate melting modules including a module fitted with crown burners and/or submerged electrodes, and a module fitted with submerged burners. The submerged combustion module can be fed with cullet that may be contaminated, that may originate from the flat glass industry or the glass hollow-ware industry. It is thus possible to charge into the module animal meals, sand contaminated with hydrocarbons, foundry sand, organic polymer/glass composites or metal/glass composites, or residue from laminated glass or glass fitted with connectors or glass equipped with oxide or metal nitride coatings, or metallic coatings of the silver type, glass from the flat glass industry or alternatively greased reinforced glass yarns or insulation mineral wool coated with adhesive or binder based organic resin. Residues from the oil industry, organic polymers, heavy oil, coal may be introduced as fuel.

US2014/007623 discloses submerged combustion melters, wherein one or more of the submerged burners is designed to impart heat and turbulence to the molten material.

DE10029983 discloses a submerged combustion melter comprising a upper melt volume in which submerged burners generate heat and turbulence as well as homogenization of the melt, and a lower melt volume, located below the submerged burners in which a vertical downwards oriented flow is generated in the melt.

WO2015/014918 discloses a process for making vitrified products in a submerged combustion melter, using a melt produced from batch materials comprising 35 to 100 wt% man-made mineral fibers.

There is an ongoing need for cost-efficient as well as energy-efficient glass melting processes. More particularly, there is a need for such processes operating under oxidizing conditions and/or capable of producing high quality melts that may be used in downstream manufacturing of high quality products.

There also is a need for economical recycling of cullet and more specifically for recycling of contaminated cullet so far refused in glass melting.

The present invention now seeks to provide an energy efficient glass melting processas per the claims.

The glass melting process may be carried out using a melter disclosed in any of WO 2015/014917, WO 2015/014918, WO 2015/014919, WO 2015/014920 or WO 2015/014921.

The boron content in the final raw material composition may be as high as 10 to 15 wt%, preferably less than 20 wt%. Depending on the cullet concentration in the raw material composition, boron contaminations may be higher than 20 % by weight of the cullet, for instance less than 30 % by weight, or less than 25 % by weight.

Similarly, the concentration of high melting contaminants, such as ceramic contaminations, is preferably kept below 2, preferably below 1 wt% in the final raw material composition. Depending on the cullet concentration in the raw material composition, the ceramic concentration in the cullet may be higher than 2% by weight, and for instance less than 10 % by weight, less than 8 % by weight or less than 5 % by weight.

The organics concentration in the final raw material composition are below 5 wt%, preferably below 3 wt%, depending, of course on the level of cullet used in the raw material mix discharged into the melter. The level of organics in the cullet composition may thus be higher, for example less than 20 %, less than 15 % or less than 10 % by weight.

Preferably, the at least one submerged burner is controlled such that the volume of the turbulent melt is at least 8%, more preferably at least 10%, even more preferably at least 15%, higher than the volume it would have without any burners firing.

It has been found that the gas injection into the liquid melt and the convection flows thereby generated in the melt reduce the density thereof. Suitable control of the oxy-fuel burners generates the desired density reduction or volume increase. Preferably, the process is run such that no significant foam layer or no foam layer at all is generated over the top of the melt level. It has been found that such a foam layer may appear disadvantageous for the energy transfer within the melter, and hence the efficiency thereof.

For the sake of clarity and completeness, the level the melt would be at when no burners are firing may be calculated on the basis of the melt composition and/or verified by allowing the melt to freeze in the melter. The level of turbulent melt may be determined by an appropriate measuring device, such as a known laser pointer or similar device, which averages melt levels over a given period of time, such as 1 or 5 minutes.

The increased volume or reduced density of the melt bath is considered a reflection of the turbulence level in the melt; the more turbulent the melt, the more gas bubbles are absorbed within the melt and thus "aerate" the melt. A reduced foam layer over the top of the melt level further reflects that the gas bubbles generated by the gas injection are maintained within the melt bath, rather than to accumulate on the surface thereof.

For the sake of clarity, it is pointed out that the burners arranged below the surface of the melt are herein sometimes referred to as submerged burners; it being understood that they are submerged when melt is present in the melter.

The high mixing rate generated in submerged combustion melters controlled as per the invention maintains a particularly homogenous melt, in terms of temperature profile and composition. It further allows for proper oxidation and elimination of the organic contaminants introduced with the glass cullet. It has also been found that oxidizing conditions may be maintained in the melter despite increased organics contaminations introduced by way of highly contaminated glass cullet charged together with the raw material. Further, the high turbulence in the melt maintains it at the appropriate and desired viscosity at a temperature lower than in known melters. The high turbulence and mixing of the melt allows to obtain good homogeneity and homogenous dispersion of the contaminants within the melt and, as a result higher contamination levels may be tolerated without significantly affecting the melt quality or the downstream processing. The process thus allows for use of less expensive cullet which has undergone less treatment (mixing, separation, cleaning) prior to feeding into the melter, while maintaining oxidizing conditions in the melter.

Because of the high mixing in the melt, the process may be used to manufacture pre-consumer cullet that may later be used in glass manufacturing. While starting from relatively contaminated cullet and less contaminated cullet or fresh raw material, it is possible to produce less contaminated pre-consumer cullet. The undesirable contaminants from the contaminated cullet are homogenously mixed and diluted in the melt bath, such that after vitrification, a less contaminated pre-consumer cullet may be obtained. It is well understood by the skilled person that organic contaminants are essentially oxidized and eliminated.

As far as more specifically boron contaminations are concerned, the process allows the melting and mixing of the boron glass cullet in the glass melt at reduced temperatures otherwise required to melt boron glass known as high temperature resistant glass. The invention process thus allows to recover boron, a relatively expensive element, from glass cullet and to recycle it into glass melting as desired, at relatively low cost.

The melting chamber walls may comprise double steel walls separated by circulating cooling liquid, preferably water. Particularly in the case of a cylindrical melting chamber, such assembly is relatively easy to build and is capable of resisting high mechanical stresses. A cylindrical shape of the melter facilitates balance of stresses on the outside wall. As the walls are cooled, for example water cooled, melt preferably solidifies and forms a protective layer on the inside of the melter wall. The melter assembly may not require any internal refractory lining and therefore needs less or less costly maintenance. In addition, the melt is not contaminated with undesirable components of refractory material normally eroded from an internal refractory lining. The internal face of the melter wall may advantageously be equipped with tabs or pastilles or other small elements projecting towards the inside of the melter. These may help in constituting and fixing a layer of solidified melt on the internal melter wall generating a lining having thermal resistance and reducing the transfer of heat to the cooling liquid in the double walls of the melter.

The melter may be equipped with heat recovery equipment. Hot fumes from the melter may be used to preheat raw material or the thermal energy contained in them may be recovered and used otherwise. Similarly, the thermal energy contained in the cooling liquid circulating between the two walls of the melter may also be recovered for heating or other purposes.

Overall the energy efficiency of submerged combustion melters is significantly improved compared to conventional tank melters. The high turbulence and mixing further improves the energy efficiency compared to existing SCMs and allows for higher contamination levels of the melt, as herein described.

The raw materials including glass cullet may be loaded through an opening in the melter wall, above the melt surface. Said opening may be opened and closed, for example by a piston, to minimize escape of heat and fumes. Raw material may be prepared and loaded into an intermediate chute and subsequently fall into the melter, in an opposite direction to escaping fumes, onto the melt surface. This countercurrent flow may advantageously preheat the raw materials. In the alternative, the raw materials may be charged below the level of the melt, by way of a screw feeder or a hydraulic feeder.

Melt may be withdrawn continuously or batch wise from the melter for further downstream processing, if so desired, and forming in appropriate forming equipment.

Where raw material including glass cullet is loaded close to the melter wall, the melt outlet is preferably arranged opposite the material inlet. In the case of discontinuous discharge of melt, a discharge opening may be controlled by, for example, a ceramic piston. In the alternative a syphon-type discharge may be used which controls the melt level in the melter.

The submerged burners preferably inject high pressure jets of combustion products into the melt that is sufficient to overcome the liquid pressure and to create forced upward travel of the flame and combustion products. The speed of the combustion and/or combustible gases, notably at the exit from the burner nozzle(s), may be ≥ 60 m/s, ≥ 100 m/s or ≥ 120 m/s and/or ≤350 m/s, ≤330 m/s, ≤300 or ≤200 m/s. Preferably the speed of the combustion gases is in the range of about 60 to 300 m/s, preferably 100 to 200, more preferably 110 to 160 m/s.

The melt within the melter during operation may reach a temperature, notable a temperature at which it is removed from the melter, which is at least 1100 ° C, at least 1200 ° C or at least 1250 ° C and which may be no more than 1650 ° C, no more than 1600 ° C, no more than 1500 ° C or no more than 1450 ° C.

According to a preferred embodiment, the submerged combustion is performed such that a substantially toroidal melt flow pattern is generated in the melt, having a substantially vertical central axis of revolution, comprising major centrally inwardly convergent flows at the melt surface; the melt moves downwardly at proximity of the vertical central axis of revolution and is recirculated in an ascending movement back to the melt surface, thus defining a substantially toroidal flow pattern.

The generation of such a toroidal flow pattern ensures highly efficient mixing of the melt and absorption of raw material into the melt, and homogenizes the melt in terms of temperature profile and composition, thus leading to high quality final product.

Advantageously, the glass melting comprises melting the solid batch material including glass cullet, in a submerged combustion melter by subjecting the melt to a flow pattern which when simulated by computational fluid dynamic analysis shows a substantially toroidal melt flow pattern in the melt, comprising major centrally inwardly convergent flow vectors at the melt surface, with the central axis of revolution of the toroid being substantially vertical.

At the vertical axis of revolution of said toroidal flow pattern, the flow vectors have a downward component reflecting significant downward movement of the melt in proximity of said axis. Towards the melter bottom, the flow vectors change orientation showing outward and then upward components.

Preferably the fluid dynamics model is code ANSYS R14.5, taking into consideration the multi-phase flow field ranging from solid batch material to liquid melt and gas generated in the course of the conversion, and the batch-to-melt conversion.

A toroidal melt flow pattern may be obtained using submerged combustion burners arranged at the melter bottom in a substantially annular burner zone imparting a substantially vertically upward directed speed component to the combustion gases. Advantageously, the burners are arranged with a distance between adjacent burners of about 250 - 1250 mm, advantageously 500 - 900 mm, preferably about 600 - 800, even more preferably about 650 - 750 mm. It is preferred that adjacent flames do not merge.

Each burner axis and/or a speed vector of the melt moving upwards over or adjacent to the submerged burners may be slightly inclined from the vertical, for example by an angle which is ≥1°, ≥2°, ≥3° or ≥5 and/or which is ≤ 30°, preferably ≤ 15°, more preferably ≤10°, notably towards the center of the melter. Such an arrangement may improve the flow and directs melt flow away from the outlet opening and/or towards a center of the melter thus favoring a toroidal flow and incorporation of raw material in to the melt.

According to one embodiment, each central burner axis is inclined by a swirl angle with respect to a vertical plane passing through a central vertical axis of melter and the burner center. The swirl angle may be ≥1°, ≥2°, ≥3°, ≥5° and/or ≤ 30°, ≤ 20°, ≤ 15° or ≤ 10°. Preferably, the swirl angle of each burner is about the same. Arrangement of each burner axis at a swirl angle imparts a slightly tangential speed component to the upward blowing flames, thus imparting a swirling movement to the melt, in addition to the toroidal flow pattern.

The burner zone is defined as a substantially annular zone. Burner arrangements, for example on an elliptical or ovoid line within the relevant zone are possible, but the burners are preferably arranged on a substantially circular burner line.

Preferably, the flow pattern comprises an inwardly convergent flow at the melt surface followed by a downwardly oriented flow in proximity of the central axis of revolution of the toroid. Said central axis of revolution advantageously corresponds to the vertical axis of symmetry of the melter. By axis of symmetry is meant the central axis of symmetry and, if the melter shows a transversal cross-section which does not have any single defined axis of symmetry, then the axis of symmetry of the circle in which the melter section is inscribed. The downwardly oriented flow is followed by an outwardly oriented flow at the bottom of the melter and a substantially annular upward flow at proximity of the burners, reflecting recirculation of melt toward the burner zone and in an ascending movement back to the melt surface, thus defining a substantially toroidal flow pattern.

The inwardly convergent flow vectors at the melt surface advantageously show a speed comprised between 0.1-3 m/s. The downward oriented speed vectors at proximity of the vertical central axis of revolution are preferably of significant magnitude reflecting a relatively high speed of material flowing downwardly. The downward speed vectors may be between 0.1-3 m/s. The melt and/or the raw materials within the melter, at least at one portion of the melter and notably at the melt surface (particularly inwardly convergent flow vectors at the melt surface) and/or at or proximate a vertical central axis of revolution, may reach a speed which is ≥0.1 m/s, ≥0.2 m/s, ≥0.3 m/s or ≥0.5 m/s and/or which is ≤2.5 m/s, ≤2 m/s, ≤1.8 m/s or ≤1.5 m/s.

The preferred toroidal flow pattern ensures highly efficient mixing and homogenizes the melt in terms of temperature profile and composition. It also favors the absorption of raw material including glass cullet into the melt and improves heat transfer to fresh raw material, thereby allowing for efficient oxidation of the organics contamination present in the glass cullet. This highly efficient mixing reduces required residence time in the melter prior to withdrawal, while avoiding or at least reducing the risk of raw material short cutting the melt circulation.

In one preferred embodiment, the burners are arranged at a distance of about 250 - 750 mm from the side wall of said melting chamber; this favors the preferred flow described above and avoids flame attraction to the melting chamber side walls. Too small a distance between burners and side wall may damage or unnecessarily stress the side wall. While a certain melt flow between burner and wall may not be detrimental and may even be desirable, too large a distance will tend to generate undesirable melt flows and may create dead zones which mix less with the melt in the center of the melter and lead to reduced homogeneity of the melt.

The distance between submerged burners is advantageously chosen such as to provide the desired toroidal flow pattern within the melt but also to avoid that adjacent flames merge. While this phenomenon depends on many parameters such as temperature and viscosity of the melt, pressure and other characteristics of the burners, it has been found advantageous to select a burner circle diameter comprised between about 1200 and 2000 mm. Depending on burner type, operating pressure and other parameters, too large a diameter will lead to diverging flames; too narrow a diameter will lead to merging flames.

Preferably at least 6 burners are provided, for example arranged on a burner circle line, more preferably 6 to 10 burners, even more preferably 6 to 8 burners, depending on the melter dimensions, burner dimensions, operating pressure and other design parameters.

Each burner or each of a plurality of a group of burners, for example opposed burners, may be individually controlled. Burners close to a raw material discharge may be controlled at different, preferably higher gas speeds and/or pressures than adjacent burners, thus allowing for improved heat transfer to the fresh raw material that is being loaded into the melter. Higher gas speeds may be required only temporarily, that is, in the case of batch wise loading of fresh raw material, just during the time period required for absorption of the relevant load into the melt contained in the melter.

It may also be desirable to control burners that are located close to a melt outlet at a lower gas speed/pressure in order not to disturb the outlet of the melt.

The melting chamber is preferably substantially cylindrical in cross section; nevertheless, it may have an elliptical cross section or polygonal cross section showing more than 4 sides, preferably more than 5 sides.

An embodiment of a melter suitable for use in accordance with the present invention is described below, with reference to the appended drawings of which:
Figures 1a and 1b are schematic representations of a toroidal flow pattern;

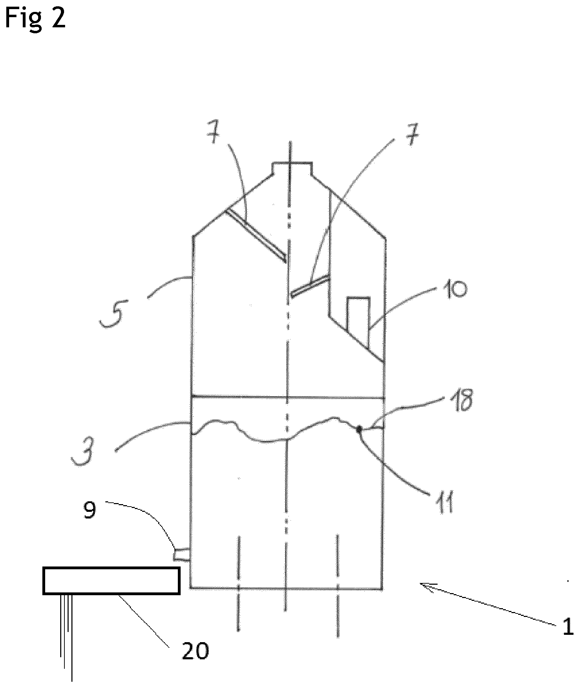

Figure 2 shows schematically a vertical section through a melter followed by a downstream forming device; and

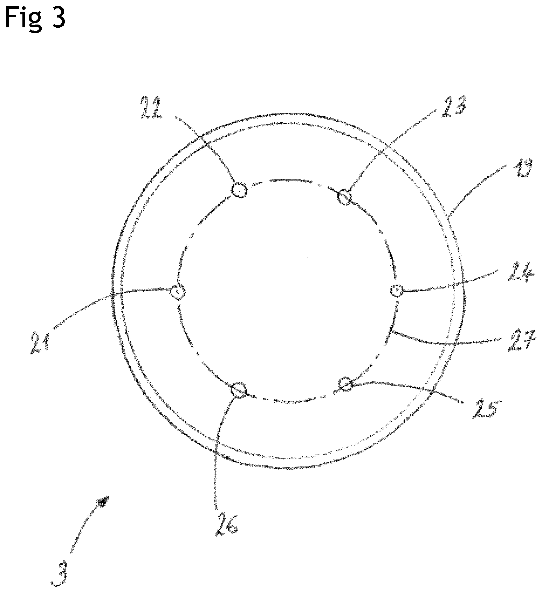

Figure 3 is a schematic representation of a burner layout.

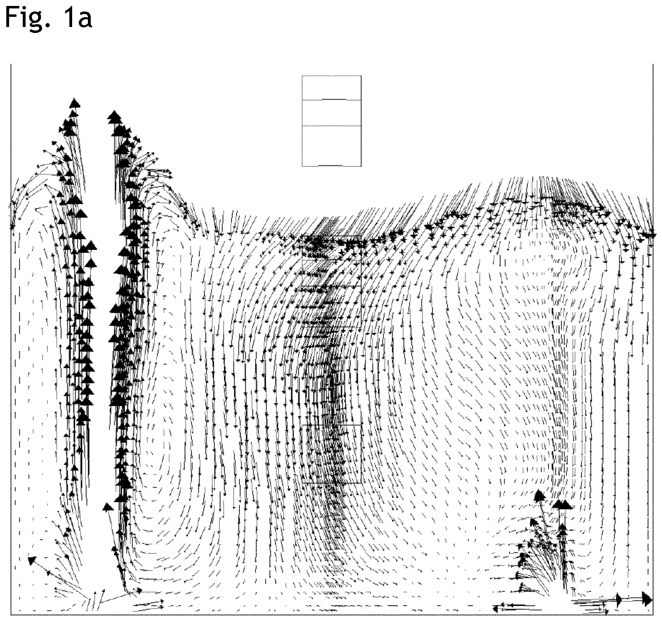

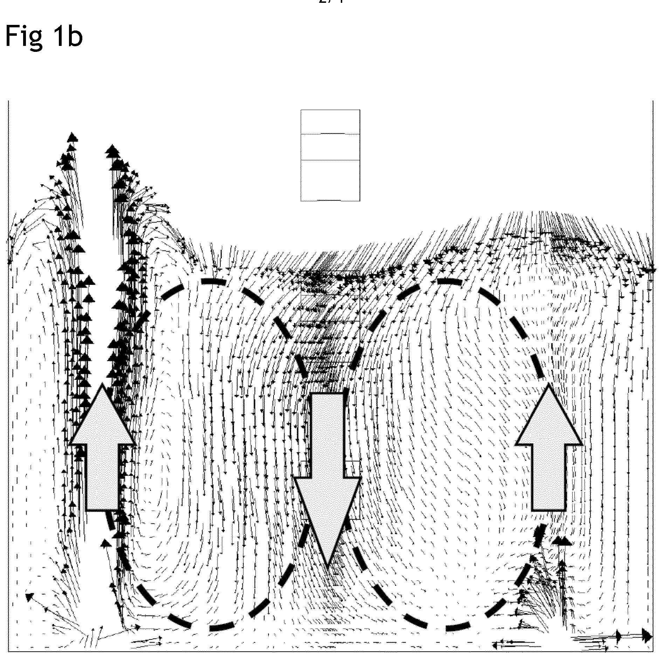

With reference to Figs 1a and 1b, a toroidal flow pattern is preferably established in which melt follows an ascending direction close to submerged burners 21, 22, 23, 24, 25, 26 which are arranged on a circular burner line 27, flows inwardly towards the center of the circular burner line at the melt surface, and flows downwards in the proximity of the said center. The toroidal flow generates agitation in the melt, ensures good stirring of the melt, and absorption of raw material including glass cullet into the melt.

It has been found that the burner arrangement and control to obtain the above described toroidal melt flow pattern may ensure appropriate mixing in the melt as well as the required turbulence to sufficiently increase the melt volume (or reduce the melt density) to reach the objective of the present invention. Foam formation is particularly reduced, as the gas bubbles reaching the top of the melt are reabsorbed and mixed within the melt as a result of the toroidal flow pattern.

The illustrated melter 1 comprises: a cylindrical melting chamber 3 having an internal diameter of about 2.0 m which contains the melt; an upper chamber 5; and a chimney for evacuation of the fumes. The upper chamber 5 is equipped with baffles 7 that prevent any melt projections thrown from the surface 18 of the melt being entrained into the fumes. A raw material feeder 10 is arranged at the upper chamber 5 and is designed to load fresh raw material including man-made mineral fibers into the melter 1 at a point 11 located above the melt surface 18 and close to the side wall of the melter. The feeder 10 comprises a horizontal feeding means, for example a feed screw, which transports the raw material mix to a hopper fastened to the melter, the bottom of which may be opened and closed by a vertical piston. In the alternative, an underlevel feeder may charge raw material directly into the melt, under the level of the melt. The bottom of the melting chamber comprises six submerged burners 21, 22, 23, 24, 25, 26 arranged on a circular burner line 27 concentric with the melter axis and having a diameter of about 1.4 m. The melt may be withdrawn from the melting chamber 3 through a controllable outlet opening 9 located in the melting chamber side wall, close to the melter bottom, substantially opposite the feeding device 10. The melt withdrawn from the melter may then be allowed to cool and ground as required. In the alternative, a syphon-type outlet may be used which concomitantly continuously controls the level of the melt in the melter.

The temperature within the melt may be between 1350°C and 1450°C, preferably about 1400° C, depending on the composition of the melt, desired viscosity and other parameters. Preferably, the melter wall is a double steel wall cooled by a cooling liquid, preferably water. Cooling water connections provided at the external melter wall allow a flow sufficient to withdraw energy from the inside wall such that melt can solidify on the internal wall and the cooling liquid, here water, does not boil.

The melter 1 may be mounted on dampers adapted to absorb vibrational movements.

The submerged burners comprise concentric tube burners operated at gas flows of 100 to 200 m/s, preferably 110 to 160 m/s and generate combustion of fuel gas and oxygen containing gas within the melt. The combustion and combustion gases generate agitation within the melt before they escape into the upper chamber and then through the chimney. These hot gases may be used to preheat the raw material and/or the fuel gas and/or oxidant gas (eg oxygen, industrial oxygen have an oxygen content ≥ 95% by weight or oxygen enriched air) used in the burners. The fumes are preferably filtered prior to release to the environment, optionally using dilution with ambient air to reduce their temperature prior to filtering.

The melt may then be discharged continuously or batch wise into a downstream processing and/or forming equipment 20 known per se for desired applications.

The melt obtained is of high quality. The above described production process is less energy demanding then known processes, because of the choice of submerged combustion melters that allow for improved energy transfer to the melt, shorter residence times and thus less heat loss, and because the high turbulence and stirring leads to a more homogenous melt at reduced melt viscosity, which in turn may allow for operation at reduced temperatures. Furthermore, submerged combustion may advantageously be performed in water-cooled melters which are more easy and less costly to maintain and repair and which further allow for recycling of the energy withdrawn from the cooling fluid. In addition, the high turbulence allows for use of highly contaminated cullet, such as cullet comprising contaminations by organic compounds and/or by boron which are significantly beyond those tolerated in known processes.

It has been found that despite the relatively high level of contamination of the cullet used at relatively high rate, hence constituting a highly contaminated melt, the melt produced is advantageously used for forming mineral wool by external or internal centrifugation. The obtained mineral wool fibers are of high quality and appropriate length. This shows that the high contamination level has not affected the rupturing of the fibers as a result of the presence of otherwise undesirable contaminants. Similarly, it has been found that the highly contaminated melt may advantageously be used for forming continuous fibers, such as fibers for reinforcement. Here again, the fibers have shown desirable strength patterns which are not significantly affected by the presence of otherwise undesirable contaminants.

## Claims

1. Glass melting process
**characterised in that** the glass melting process comprises melting glass cullet in a submerged combustion melter comprising at least one submerged burner, under oxidizing conditions, wherein the glass cullet comprises more than 3 wt%, or more than 3.5 wt% or more than 4.0 wt% or more than 4.5 wt% or more than 5 wt% boron expressed as B2O3, and high melting contaminants of more than 20 ppm, more than 75 ppm, more than 100 ppm more than 150 ppm or more than 200 ppm, more than 250 ppm or more than 300 ppm, wherein the organics concentration in the final raw material composition is below 5 wt%, preferably below 3 wt%, and wherein the concentration of high melting contaminants, such as ceramic contaminations, is preferably kept below 2, preferably below 1 wt% in the final raw material mix.

2. Process according to claim 1 wherein the glass cullet further comprises more than 0.5 wt% or more than 0.8 wt% or more than 1.0 wt%, or more than 1.2 wt% of organic contamination.

3. Process according to claim 1 or 2 wherein the boron content in the final raw material mix is less than 20 % by weight, preferably between 10 and 15 % by weight.

4. Process according to claim 2 or 3 wherein the amount of organic contamination in the cullet is below 5 wt%, preferably below 3 wt%.

5. Process according to any preceding claim, wherein the quantity of glass cullet used in the raw material mix amounts up to 60-80 %wt.

6. Process according to any preceding claim, wherein the melting chamber walls comprise double steel walls separated by circulating cooling liquid, preferably water.

7. Process according to any preceding claim, wherein heat is recovered from the hot fumes and/or from the cooling liquid.

8. Process according to any preceding claim, wherein heat is recovered from the hot fumes to preheat the raw materials.

9. Process according to any preceding claim, wherein part at least of the melt is withdrawn continuously or batchwise from the melter.

10. Process according to any preceding claim, wherein the submerged combustion is performed such that a substantially toroidal melt flow pattern is generated in the melt, having a substantially vertical central axis of revolution, comprising major centrally inwardly convergent flows at the melt surface; the melt moves downwardly at proximity of the vertical central axis of revolution and is recirculated in an ascending movement back to the melt surface, thus defining a substantially toroidal flow pattern.

11. Process according to any preceding claim further comprising downstream internal or external fiberizing for forming mineral wool fibers.

12. Process according to any of claims 1 - 11 further comprising downstream forming of continuous fibers.

## Patentansprüche

1. Glasschmelzverfahren, **dadurch gekennzeichnet, dass** das Glasschmelzverfahren das Schmelzen von Bruchglas in einem Tauchbrennerofen mit mindestens einem Tauchbrenner unter oxidierenden Bedingungen umfasst, wobei das Bruchglas mehr als 3 Gew.-% oder mehr als 3,5 Gew.-% oder mehr als 4 Gew.-% oder mehr als 4,5 Gew.-% oder mehr als 5 Gew.-% Bor enthält, ausgedrückt als B²O₃, sowie hochschmelzende Verunreinigungen in einer Konzentration von mehr als 20 ppm, mehr als 75 ppm, mehr als 100 ppm, mehr als 150 ppm oder mehr als 200 ppm, mehr als 250 ppm oder mehr als 300 ppm, wobei die Konzentration an organischen Stoffen in der Endzusammensetzung des Rohmaterials weniger als 5 Gew.-%, vorzugsweise weniger als 3 Gew.-% beträgt, und wobei die Konzentration an hochschmelzenden Verunreinigungen, wie z. B. keramischen Materialien, vorzugsweise unter 2, vorzugsweise unter 1 Gew.- % in der endgültigen Rohstoffzusammensetzung gehalten wird.

2. Verfahren nach Anspruch 1, wobei das Bruchglas zusätzlich mehr als 0,5 Gew.-% oder mehr als 0,8 Gew.-% oder, mehr als 1,0 Gew.-% oder mehr als 1,2 Gew.-% organische Stoffe enthält.

3. Verfahren nach Anspruch 1 oder 2, wobei der Borgehalt in der endgültigen Rohstoffzusammensetzung weniger als 20 Gew.-%, vorzugsweise zwischen 10 und 15 Gew.-%, beträgt.

4. Verfahren nach Anspruch 2 oder 3, wobei der Gehalt an organischen Stoffen im Bruchglas weniger als 5 Gew.-%, vorzugsweise weniger als 3 Gew.-%, beträgt.

5. Verfahren nach einem der vorhergehenden Ansprüche, wobei die in der Rohstoffzusammensetzung verwendete Bruchglasmenge 60-80 Gew.-% beträgt.

6. Verfahren nach einem der vorhergehenden Ansprüche, wobei die Wände der Schmelzkammer doppelte Stahlwände aufweisen, die durch ein zirkulierendes Kühlmittel, vorzugsweise Wasser, getrennt sind.

7. Verfahren nach einem der vorhergehenden Ansprüche, wobei Wärme aus den heißen Rauchgasen und/oder dem Kühlmittel zurückgewonnen wird.

8. Verfahren nach einem der vorhergehenden Ansprüche, wobei Wärme aus den heißen Rauchgasen zurückgewonnen wird, um die Rohstoffe vorzuwärmen.

9. Verfahren nach einem der vorhergehenden Ansprüche, wobei zumindest ein Teil des Schmelzbades kontinuierlich oder diskontinuierlich aus dem Schmelzofen entnommen wird.

10. Verfahren nach einem der vorhergehenden Ansprüche, wobei das Schmelzen durch Tauchverbrennung so durchgeführt wird, dass ein im Wesentlichen toroidales Strömungsmuster im Schmelzbad erzeugt wird, das eine im Wesentlichen vertikale zentrale Rotationsachse und an der Oberfläche des Schmelzbades hauptsächlich zentral nach innen konvergierende Strömungen aufweist, wobei das Schmelzbad sich nahe der zentralen vertikalen Rotationsachse nach unten bewegt und dann in einer Aufwärtsbewegung zur Oberfläche des Schmelzbades zurückgeführt wird, wodurch ein im Wesentlichen toroidales Strömungsmuster entsteht.

11. Verfahren nach einem der vorhergehenden Ansprüche, das ferner eine nachgeschaltete Anlage zur internen oder externen Bildung von Mineralwollfasern umfasst.

12. Verfahren nach einem der Ansprüche 1 bis 11, das ferner eine nachgeschaltete Anlage zur Bildung von kontinuierlichen Fasern umfasst.

## Revendications

1. Procédé de fusion de verre **caractérisé en ce que** le procédé de fusion de verre comporte la fusion de calcin dans un four à combustion immergée comportant au moins un brûleur immergé, dans des conditions oxydantes, le calcin comportant plus de 3% en poids, ou plus de 3,5 % en poids ou plus de 4 % en poids ou plus de 4,5 % en poids ou plus de 5 % en poids de bore exprimé en B₂O₃, et des matières contaminantes à haut point de fusion à plus de 20 ppm, plus de 75 ppm, plus de 100 ppm ou plus de 150 ppm ou plus de 200 ppm, plus de 250 ppm ou plus de 300 ppm, la concentration en matières organiques dans la composition finale de la matière première étant inférieure à 5 % en poids, de préférence inférieure à 3 % en poids, et la concentration des matières contaminantes à haut point de fusion, comme des matières céramiques, étant de préférence maintenue en dessous de 2, de préférence en dessous de 1 % en poids dans la composition finale de la matière première.

2. Procédé selon la revendication 1 dans lequel le calcin comporte par ailleurs plus de 0,5 % en poids ou plus de 0,8 % en poids ou plus de 1,0 % en poids ou plus de 1,2 % en poids de matières organiques.

3. Procédé selon la revendication 1 ou 2 dans lequel la teneur en bore dans la composition finale de la matière première est inférieure à 20 % en poids, de préférence entre 10 et 15 % en poids.

4. Procédé selon la revendication 2 ou 3 dans lequel la teneur en matières organiques dans le calcin est inférieure à 5 % en poids, de préférence inférieure à 3 % en poids.

5. Procédé selon l'une des revendications précédentes dans lequel la quantité de calcin utilisé dans la composition de la matière première s'élève de 60 - 80 % en poids.

6. Procédé selon l'une des revendications précédentes dans lequel les parois de la chambre de fusion comportent des doubles parois en acier séparées par un liquide de refroidissement en circulation, de préférence de l'eau.

7. Procédé selon l'une des revendications précédentes dans lequel on récupère de la chaleur des fumées chaudes et/ou du liquide de refroidissement.

8. Procédé selon l'une des revendications précédentes dans lequel on récupère de la chaleur des fumées chaudes afin de préchauffer les matières premières.

9. Procédé selon l'une des revendications précédentes dans lequel une partie au moins du bain fondu est soutiré du four de fusion en continu ou en discontinu.

10. Procédé selon l'une des revendications précédentes dans lequel on effectue la fusion par combustion immergée de manière à obtenir un modèle de flux de bain fondu essentiellement toroïdal dans le bain fondu, comportant un axe central de révolution essentiellement vertical et, à la surface du bain fondu, une majeure partie des flux convergeant centralement vers l'intérieure, le bain fondu se déplaçant vers le bas à proximité de l'axe vertical central de révolution et étant recirculé en un mouvement ascendant vers la surface du bain fondu, définissant ainsi un modèle de flux essentiellement toroïdal.

11. Procédé selon l'une des revendications précédentes comportant par ailleurs en aval une fibérisation interne ou externe afin de former des fibres de laine minérale.

12. Procédé selon l'une des revendications 1 - 11 comportant par ailleurs en aval une formation de fibres continues.
